# EUROPÄISCHE PATENTSCHRIFT

(11) **EP 1 642 051 B1**
(45) Veröffentlichungstag und Bekanntmachung des Hinweises auf die Patenterteilung: **11.02.2009**
(21) Anmeldenummer: 04739676.7
(22) Anmeldetag: 08.06.2004
(51) Int. Cl.: F16H 61/04, F16H 3/12

(54) **VERFAHREN ZUR STEUERUNG UND REGELUNG EINER GETRIEBEBREMSE IN EINEM KRAFTFAHRZEUG-AUTOMATGETRIEBE**
METHOD FOR CONTROLLING AND REGULATING A TRANSMISSION BRAKE IN AN AUTOMATIC MOTOR VEHICLE TRANSMISSION
PROCEDE DE COMMANDE ET DE REGULATION D'UN FREIN D'ENGRENAGE DANS UNE BOITE DE VITESSES AUTOMATIQUE D'UN VEHICULE AUTOMOBILE

(30) Priorität: 05.07.2003 DE 10330517
(43) Veröffentlichungstag der Anmeldung: 05.04.2006
(73) Patentinhaber: ZF Friedrichshafen AG, 88038 Friedrichshafen (DE)
(72) Erfinder: BACHMANN, Volker, 88097 Eriskirch (DE); STEINBORN, Mario, 88046 Friedrichshafen (DE); KALTHOFF, Rudolf, 88250 Weingarten (DE); SAYMAN, Anthony, Robert, Laurinburg, NC 28352 (US)
(86) Internationale Anmeldenummer: PCT/EP2004/006145
(87) Internationale Veröffentlichungsnummer: WO 2005/003601

(56) Entgegenhaltungen:
- EP-A- 0 947 741
- EP-A- 1 092 582
- US-A- 3 834 499
- US-A- 5 425 689

## Beschreibung

Die Erfindung betrifft ein Verfahren zur Steuerung und Regelung einer Getriebebremse in einem Kraftfahrzeug-Automatgetriebe gemäß dem Oberbegriff des Patentanspruchs 1.

Aus der Praxis sind manuelle und automatisierte Schaltgetriebe bekannt, die über eine Eingangswelle, eine zur Eingangswelle koaxiale Ausgangswelle und eine Vorgelegewelle verfügen. Der Ganganzahl entsprechend befinden sich auf den Getriebewellen Zahnradpaare, bei denen jeweils ein auf einer Getriebewelle befestigtes Festrad mit wenigstens einem auf einer weiteren Getriebewelle angeordneten Losrad kämmt.

Bei einem Gangschaltvorgang wird in der Regel eines der Losräder mit seiner Getriebewelle über eine formschlüssig wirkende Koppelvorrichtung drehfest verbunden, die dann das gesamte Antriebsmoment überträgt. Um große Antriebsmomente mit einfachen, platzsparenden und leicht zu schaltenden Mitteln übertragen zu können, werden vorzugsweise formschlüssige Kupplungen genutzt. Während des Einkoppel- beziehungsweise Schaltvorgangs wird die Zugkraft des Antriebsmotors jedoch mittels einer gesonderten Schalt- und Anfahrkupplung unterbrochen.

Um solche Getriebe einfach, leicht, stoßfrei, schnell und geräuscharm schalten zu können, müssen die zu schaltenden Teile der Koppelvorrichtungen nahezu die gleiche Drehzahl aufweisen, bevor diese ineinander greifen. Hierzu sind Synchronisationsvorrichtungen vorgesehen, die den antriebsseitigen Teil des Antriebsstrangs zwischen der Schalt- beziehungsweise Anfahrkupplung und der jeweils zu schaltenden Koppelvorrichtung während der Zugkraftunterbrechungsphase auf eine Drehzahl verzögert oder beschleunigt, die durch die Fahrgeschwindigkeit und die Getriebeübersetzung des Zielgangs vorgegeben ist. Schaltet man von einem niedrigen Gang in einen höheren Gang, so wird durch diese Synchronisationsvorrichtungen der antriebsseitige Teil des Getriebes verzögert, während dieser bei einem Rückschaltvorgang beschleunigt wird.

Die üblichen Synchronisationsvorrichtungen verfügen für diese Beschleunigungs- beziehungsweise Abbremsvorgänge über Reibkupplungen in Form von Reibkegeln. Diese müssen nicht das gesamte Antriebsmoment übertragen, sondern nur die Synchronisationsarbeit verrichten, die sich aus dem Trägheitsmoment der rotierenden Massen des antriebsseitigen Teils des Getriebes sowie der reibungsbedingten Schleppmomente ergibt. Sie können daher entsprechend klein dimensioniert sein.

Üblicherweise ist jeder dieser formschlüssigen Koppelvorrichtungen eine Synchronisationsvorrichtung zugeordnet. Es ist aber auch möglich, dass eine zentrale Synchronisationsvorrichtung die Synchronisationsarbeit für mehrere oder alle formschlüssige Koppelvorrichtungen übernimmt.

Um den Fahrer eines Fahrzeuges von den mit den Schaltvorgängen verbundenen mechanischen Schalt- und Kuppelvorgängen zu entlasten, werden bei automatisierten Schaltgetrieben diese Schalt- und Kuppelvorgänge von hilfskraftbetätigbaren Stellvorrichtungen vorgenommen, die von einer Steuerungs- und Regelungsvorrichtung angesteuert werden. Dazu ermittelt eine solche Steuerungs- und Regelungsvorrichtung aus Fahrzeugsensordaten die auf den jeweiligen Schaltvorgang bezogenen Fahrerwünsche und steuert beziehungsweise regelt auf deren Grundlage mittels abgespeicherter Steuerungs- und Regelungsprogramme die Schaltabläufe in dem Getriebe.

Bei solchen automatisierten Schaltgetrieben ist der Synchronisationsvorgang zum Beispiel dadurch steuer- und regelbar, dass bei Rückschaltvorgängen die Drehzahl der Getriebeeingangswelle oder der Vorgelegewelle durch Erhöhen der Motordrehzahl angehoben wird, während bei Hochschaltvorgängen diese antriebsseitigen Wellen des Getriebes abgebremst werden. Zur Durchführung derartiger Abbremsvorgänge verfügen zentral synchronisierte Getriebe üblicherweise über eine Getriebebremse, die mit der Vorgelegewelle mechanisch gekoppelt ist. Diese Getriebebremsen sind elektrisch, hydraulisch oder aber auch pneumatisch betätigbar, wobei letztere Betätigungsart häufig bei Nutzfahrzeuggetrieben anzutreffen ist.

So ist aus der DE 196 52 916 A1 ein automatisiertes Schaltgetriebe mit einer hydraulisch oder pneumatisch betätigbaren Getriebebremse bekannt, bei dem letztere auf eine Vorgelegewelle einwirken kann. Die Druckmittelsteuerventile der Getriebebremse werden dazu von einem Mikroprozessor in Abhängigkeit von der gewünschten Schaltart und den sonstigen Fahrbetriebsbedingungen gesteuert.

Wird beispielsweise bei einer Hochschaltung ein höherer Gang vorgewählt und muss die Vorgelegewelle zur Synchronisierung demgemäss abgebremst werden, so wird von dem Mikroprozessor ausgehend von der vorgewählten Übersetzung und von der mittels eines Sensors erfassten Getriebeausgangsdrehzahl eine Soll-Drehzahl (Synchrondrehzahl) für die Vorgelegewelle berechnet, bei deren Erreichen die mechanische Kopplung des Zielganglosrades mit dieser Welle erfolgen kann.

Wegen des in der Regel nur schwer zu regulierenden Luftdrucks bei pneumatischen Stellmitteln sowie wechselnder Umgebungsbedingungen ist die Bremsleistung sowie insbesondere der Bremsgradient einer solchen pneumatischen Getriebebremse jedoch starken Schwankungen unterworfen. Um das erforderliche Drehzahlfenster, also den vorgegebenen maximalen Abstand der Ist-Drehzahl der Getriebeeingangswelle beziehungsweise der von dieser angetriebenen Vorgelegewelle zu der Soll-Drehzahl für den konkreten Schaltvorgang zu erreichen, wird nach diesem Stand der Technik zusätzlich auch noch der Bremsgradient der Getriebebremse ermittelt und von dem Mikroprozessor bei der Steuerung der Getriebebremse berücksichtigt. Dazu werden die Steuerventile in der Weise von dem Mikroprozessor angesteuert, dass die genannten Sollwertvorgaben und damit die Synchrondrehzahl zum Einrücken der Koppelvorrichtung an dem betroffenen Losrad erreicht wird.

Leider ist die Synchrondrehzahl keine feste Größe für einen Schaltvorgang, sondern unter anderem abhängig von der Fahrbahnneigung, da es während eines Schaltvorgangs bei geöffneter Anfahr- und Schaltkupplung sowie einer Fahrwegsteigung zu einer negativen Fahrzeugbeschleunigung und damit zu einem Abfall der Getriebeausgangsdrehzahl, beziehungsweise bei einer Gefällestrecke bei nicht betätigter Betriebsbremse zu einer positiven Fahrzeugbeschleunigung kommt. Diese Einflüsse wurden bei den Steuerungs- und Regelungsverfahren für Getriebebremsen nach diesem Stand der Technik bisher nicht berücksichtigt, so dass deren Arbeitsweise eher unvollkommen war.

Daher wird durch die nicht vorveröffentlichte DE 103 05 254 A1 vorgeschlagen, dass zusätzlich zu den vorgenannten Größen zur Steuerung und Regelung der Getriebebremse der Gradient der Getriebeausgangswellendrehzahl ausgewertet wird. Durch diese Vorgehensweise wird die Getriebeausgangswellendrehzahl mit der Übersetzung des Zielganges auf die Drehzahl der Vorgelegewelle bezogen, sowie Umwelt- und/oder Fahrstreckeneinflüsse auf den Schaltvorgang besser als bis dahin bekannt berücksichtigt. Insbesondere während des Schaltvorgangs auftretende schnelle Änderungen der Getriebeausgangswellendrehzahl können so in die Steuerung und Regelung der Getriebebremse mit einbezogen werden.

Darüber hinaus ist es aus dieser DE 103 05 254 A1 bekannt, dass aus dem Gradienten der Getriebeeingangs- beziehungsweise Vorgelegewellendrehzahl sowie dem Gradient der sich durch den eingangs erläuterten Einfluss des Abtriebs ändernden Getriebeausgangswellendrehzahl ein sogenannter Summengradient errechnet wird, der zur Berechnung des Abschaltzeitpunktes hinsichtlich der Betätigungsdauer der Getriebebremse bei Erreichen des Synchronzeitpunktes nutzbar ist. Dieser Abschaltzeitpunkt ist dadurch auch bei variierenden Getriebebremsreibwerten und sich verändernden Abtriebsdrehzahlgradienten für einen sicheren, schnellen und ruckfreien Schaltvorgang vergleichsweise genau bestimmbar.

Aus der US 3,834,499 A ist eine Kupplungs-, Motor- und Getriebebremsensteuerung für ein Getriebe bekannt. Die Getriebebremse wird zur Unterstützung von Hochschaltvorgängen genutzt zur Verbesserung des Synchronisierverhaltens. Dabei werden der Gradient von Getriebeeingangswellendrehzahl und der Gradient von Getriebeabtriebswellendrehzahl berücksichtigt.

Wenngleich durch die vorgenannten Verfahren das Betriebsverhalten von Getriebebremsen bereits deutlich verbessert werden konnte, gibt es noch weiteres Optimierungspotential.

Die EP 1 092 582 A2 offenbart ein Verfahren zur Steuerung eines Getriebes, wobei die Betätigung einer Motorbremse bereits beim Erreichen einer Ausschaltschwelle vor einer erwarteten Synchronisation der Drehzahlen beendet wird. Die Getriebesteuerung berücksichtigt hierfür eine spezifische Ausschaltverzögerung. Die Getriebesteuerung berechnet den voraussichtlichen Zeitpunkt der Synchronisation voraus und zieht von diesem Zeitpunkt die Ausschaltverzögerungsdauer ab. In einer zweiten Vorgehensweise des in der EP 1 092 582 A2 offenbarten Verfahrens werden die Getriebeeingangsdrehzahl und die Synchrondrehzahl überwacht und beim Erreichen eines vorgegebenen Drehzahldifferenzwertes wird ein Signal zum Ausschalten der Motorbremseinrichtung abgeben. Die Synchronisation wird als erfolgt angesehen, wenn die aktuelle Differenz zwischen den Drehzahlen vom Betrage her einen Mindest-Differenzwert unterschreitet.

Vor diesem Hintergrund ist es die Aufgabe an die Erfindung, das Betriebsverhalten einer Getriebebremse und damit das Schaltverhalten eines Automatgetriebes insbesondere bei einem Hochschaltvorgang dahingehend weiter zu verbessern, dass deren optimaler Abschaltzeitpunkt besser als bisher bestimmbar ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass die Getriebebremse vor dem berechneten Abschaltzeitpunkt zum Ausgleich der dann folgenden Nachlaufzeit vorzeitig, also unter Berücksichtigung einer gewissen Vorhaltezeit abgeschaltet werden muss, um einen optimalen Hochschaltvorgang durchzuführen. Diese Vorhaltezeit ist jedoch nicht für jede Getriebebremse identisch, sie unterliegt in der Praxis vielmehr einer bremsenindividuellen Streuung, Zur Verbesserung der Einschalteigenschaften einer Getriebebremse müssen daher die Eigenschaften der Getriebebremse in bezug auf deren individuellen Nachlaufzeit ermittelt und diese beim Betrieb der Getriebebremse individuell berücksichtigt werden.

Erfindungsgemäß wird daher also ein Verfahren zur Steuerung und Regelung einer Getriebebremse eines als Vorgelegegetriebe ausgebildeten Automatgetriebes vorgeschlagen, bei dem dieses Getriebe mit einer Getriebeeingangswelle, mit mindestens einer von der Getriebeeingangswelle antreibbaren Vorgelegewelle und mit einer Getriebeausgangswelle ausgestattet ist, und bei dem auf der Getriebeeingangswelle, auf der Vorgelegewelle und/oder auf der Getriebeausgangswelle Loszahnräder drehbar gelagert und/oder Festzahnräder drehfest angeordnet sind, die zumindest paarbildend in Zahneingriff miteinander stehen, wobei die Losräder zur Durchführung eines Gangwechsels mittels Koppelvorrichtungen mit ihrer Getriebewelle drehfest verbindbar sind.

Zudem verfügt dieses Getriebe über eine Getriebebremse, mit der die Vorgelegewelle von einem Steuergerät gesteuert bei einem Hochschaltvorgang derartig abbremsbar ist, dass deren Drehzahl im Einkoppelzeitpunkt der Synchrondrehzahl entspricht oder dieser bis auf einen vorbestimmen Abstand nahe kommt, wobei zur Bestimmung des Abschaltzeitpunktes der Getriebebremse der Bremsgradient der Vorgelege- bzw. Getriebeeingangsdrehzahl sowie der Gradient der Getriebeabtriebswellendrehzahl berücksichtigt werden. Zur weiteren Verbesserung von Hochschaltvorgängen bei einem solchen Getriebe ist nun vorgesehen, dass die Getriebebremse unter Berücksichtigung einer Vorhaltezeit vor dem berechneten Abschaltzeitpunkt abgeschaltet wird. Dazu wird diese Vorhaltezeit in Abhängigkeit von der Qualität eines absolvierten Hochschaltvorgangs, insbesondere im Hinblick auf den Synchronlauf der am Schaltvorgang beteiligten drehenden Getriebebauteile bewertet.

Da jede Getriebebremse ein in Grenzen individuelles Betriebsverhalten aufweist, wird in Ausgestaltung der Erfindung die Vorhaltezeit zudem für die in einem Automatgetriebe verbaute Getriebebremse zumindest einmal individuell ermittelt, wenngleich eine wiederholte adaptive Bestimmung dieser Vorhaltezeit bei jedem Hochschaltvorgang bevorzugt wird.

Als Bewertungskriterium für die Qualität eines absolvierten Hochschaltvorgangs wird bevorzugt das Erreichen eines vorbestimmtem engen Zieldrehzahlfensters genutzt, welches von der Getriebeeingangsdrehzahl aufgrund des Bremseingriffs erreicht werden sollte. Die obere Drehzahlgrenze dieses Zieldrehzahlfensters liegt dabei vorzugsweise unterhalb der nach der Hochschaltung messbaren Soll-Getriebeeingangsdrehzahl.

Zur Bestimmung des optimalen Abschaltzeitpunktes der Getriebebremse wird der Wert für die Vorhaltezeit bevorzugt bei jedem Hochschaltvorgang adaptiv neu bestimmt. Dazu wird der Wert der Getriebeeingangsdrehzahl mit der Ober- und Untergrenze des Zieldrehzahlfensters verglichen. Wenn der Einkoppelvorgang wie angestrebt mit einer in dem Zieldrehzahlfenster liegenden Getriebeeingangsdrehzahl erfolgt, bleibt die Vorhaltezeit zumindest für den nächsten Hochschaltvorgang konstant.

Die Vorhaltezeit wird jedoch neu berechnet, wenn der Einkoppelvorgang mit einer außerhalb des Zieldrehzahlfensters liegenden Getriebeeingangsdrehzahl stattfindet. Durch diese Vorgehensweise wird erreicht, dass für den nachfolgenden Hochschaltvorgang ein besserer Abschaltzeitpunkt für die Getriebebremse festlegbar ist. Dadurch wird letztlich die Schaltqualität des Hochschaltvorgangs gegenüber bekannten Verfahren noch einmal gesteigert.

Zur Neuberechnung der Vorhaltezeit für die Abschaltung der Getriebebremse werden erfindungsgemäß zwei unterschiedliche Verfahrensweisen vorgeschlagen. Bei dem ersten Verfahren wird dann, wenn der Einkoppelvorgang drehzahlbezogen unterhalb des Zieldrehzahlfensters erfolgt, die Vorhaltezeit für den nächsten Hochschaltvorgang um einen vorbestimmten Zeitraum verlängert, während die Vorhaltezeit um einen vorbestimmten Zeitraum verkürzt wird, wenn der Einkoppelvorgang drehzahlbezogen über dem Zieldrehzahlfenster erfolgt.

Diese vorbestimmten Zeiträume sind vorzugsweise vergleichsweise kleine Zeiträume, so dass im Laufe von einigen Hochschaltvorgängen das eine optimale Hochschaltqualität versprechende Zieldrehzahlfenster mit Sicherheit erreichbar ist.

Bei der zweiten Verfahrensweise wird zur Berechnung einer neuen Vorhaltezeit zunächst der maximale Drehzahlgradient der Getriebeeingangswelle während des laufenden Hochschaltvorgangs bestimmt, sodann die Drehzahldifferenz zwischen der Getriebeeingangsdrehzahl während des Einkoppelvorgangs und der Mitte des Zieldrehzahlfensters ermittelt, und abschließend durch eine Division der genannten Drehzahldifferenz durch den maximalen Drehzahlgradienten der Veränderungswert für den nächsten Hochschaltvorgang berechnet. Die mathematische Anwendung (also Addition oder Subtraktion) dieses Veränderungswertes auf die bisherige Vorhaltezeit führt dann zu dem neuen Vorhaltezeitwert für den folgenden Hochschaltvorgang.

Mit Hilfe dieser zweiten Vorgehensweise kann schon für den nächsten Hochschaltvorgang durch Nutzung der neuen Vorhaltezeit ein deutlich verbesserter Hochschaltvorgang durchgeführt werden.

Zum besseren Verständnis der Erfindung ist der Beschreibung eine Zeichnung beigefügt.
In dieser zeigen:
- Fig. 1: ein Diagramm mit zeitlichen Verläufen von für den Hochschaltvorgang relevanten Getriebedrehzahlen und
- Fig. 2: ein Diagramm wie in Fig. 1, jedoch mit Erläuterungen zur Bestimmung des Gradienten der Getriebeeingangsdrehzahl.

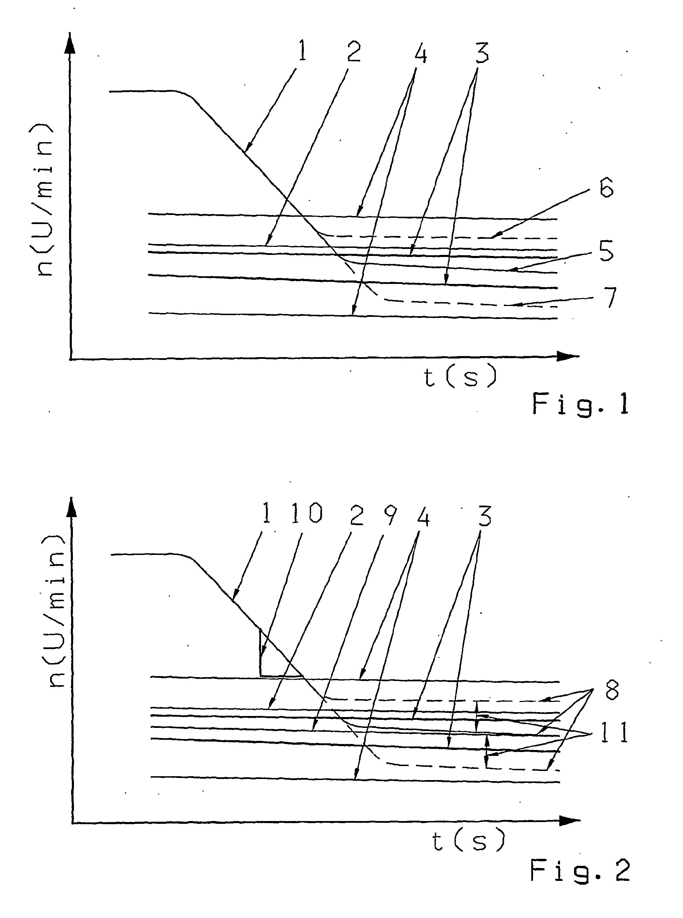

In dem in Fig. 1 gezeigten Diagramm ist zunächst einmal der Verlauf der Getriebeeingangsdrehzahl 1 über der Zeit während eines Hochschaltvorgangs dargestellt. Wie bei solchen Hochschaltvorgängen üblich, wird die Getriebeeingangsdrehzahl von einem vergleichsweise hohen Drehzahlniveau kommend durch die Bremswirkung einer nicht dargestellten Getriebebremse soweit abgebremst, dass diese einer Soll-Getriebeeingangsdrehzahl 2 entspricht oder dieser zumindest doch sehr nahe kommt. Diese Soll-Getriebeeingangsdrehzahl 2 befindet sich in einem Synchronlauf-Drehzahlfenster 4, bei deren Erreichen grundsätzlich eine mechanische Kopplung der Getriebeglieder des nächsthöheren Getriebeganges möglich ist.

Zur Durchführung von sehr komfortablen Hochschaltvorgängen ist es jedoch wünschenswert, dass die Getriebeeingangsdrehzahl 1 soweit abgebremst wird, dass diese in einem Zieldrehzahlfenster 3 liegt, welches seinerseits vorzugsweise in der Mitte des Synchronlauf-Drehzahlfensters 4 definiert ist. Zudem wird es als vorteilhaft gesehen, wenn die Obergrenze des Zieldrehzahlfensters 3 unterhalb der Soll-Getriebeeingangsdrehzahl 2 liegt. Zur Bestimmung des Abschaltzeitpunktes der Getriebebremse wird wie vorstehend erläutert der Bremsgradient der Vorgelege- bzw. Getriebeeingangsdrehzahl sowie der Gradient der Getriebeabtriebswellendrehzahl berücksichtigt.

Wie Fig. 1 veranschaulicht, kann die Getriebeeingangsdrehzahl 1 durch die Getriebebremse derart abgebremst werden, dass diese mit ihrem Drehzahlverlauf 5 im Zieldrehzahlfenster 3, über dem Zieldrehzahlfenster (Drehzahlverlauf 6) oder unter dem Zieldrehzahlfenster (Drehzahlverlauf 7) liegt. Da die beste Hochschaltqualität dann erreicht wird, wenn durch einen gut angepassten Abschaltzeitpunkt für die Getriebebremse die Getriebeeingangsdrehzahl in dem Zieldrehzahlfenster 3 liegt, wird die Getriebebremse erfindungsgemäß unter Berücksichtigung einer Vorhaltezeit vor dem berechneten Abschaltzeitpunkt abgeschaltet. Diese Vorhaltezeit wird vorzugsweise bei oder nach jedem Hochschaltvorgang neu berechnet, so dass diese für den nächsten Hochschaltvorgang genutzt werden kann.

Auf eine solche Neuberechnung der Vorhaltezeit kann verzichtet werden, wenn die Getriebeeingangsdrehzahl bei dem gerade durchgeführten Hochschaltvorgang in dem Zieldrehzahlfenster liegt.

Sofern das Einkoppeln der Getriebebauteile für den nächsten Gang drehzahlbezogen unterhalb des Zieldrehzahlfensters 3 erfolgt (Getriebeeingangsdrehzahlverlauf 7), wird in einer ersten erfindungsgemäßen Verfahrensweise die Vorhaltezeit für den nächsten Hochschaltvorgang um einen vorbestimmten Zeitraum vergrößert, so dass im Ergebnis die Getriebebremse nicht mehr so lange wie bei dem vorherigen Hochschaltvorgang bremsend wirkt und daher ein höherer Wert für Getriebeeingangsdrehzahl 1 erreicht wird.

Hat dagegen der Einkoppelvorgang bei einer Getriebeeingangsdrehzahl 6 stattgefunden, die oberhalb des Zieldrehzahlfensters 3 liegt, so wird die Vorhaltezeit um einen vorbestimmten Zeitraum verkürzt. Durch diese Maßnahme kommt der die Vorhaltezeit berücksichtigende Abschaltzeitpunkt dichter an den zuvor berechneten Abschaltpunkt heran, so dass die Getriebebremse länger als bei dem vorherigen Hochschaltvorgang bremst. Im Ergebnis wird daher ein niedrigerer Wert für die Getriebeeingangsdrehzahl 1 erreicht.

Bei den beiden vorgenannten Einstellvorgängen werden bevorzugt kleine Zeiträume gewählt, um die die Vorhaltezeit verkürzt oder verlängert wird. Dadurch ist es möglich, schon nach wenigen Hochschaltvorgängen das Zieldrehzahlfenster 3 zu treffen.

Nach einer anderen erfindungsgemäßen Verfahrensweise wird zum Erreichen des Zieldrehzahlfensters 3 zunächst der maximale Drehzahlgradient 10 der Getriebeeingangsdrehzahl 1 während des laufenden Hochschaltvorgangs bestimmt, dann die Drehzahldifferenz 11 zwischen der Getriebeeingangsdrehzahl 8 während des Einkoppelvorgangs und der Mitte 9 des Soll-Drehzahlfensters 3 ermittelt, und schließlich durch Division der Drehzahldifferenz 11 durch den maximalen Drehzahlgradienten 10 der Veränderungswert für den nächsten Hochschaltvorgang berechnet. Durch eine anschließende Addition beziehungsweise Subtraktion dieses Veränderungswertes auf die Vorhaltezeit des letzten Hochschaltvorganges wird dann eine neue Vorhaltezeit für den nächsten Hochschaltvorgang berechnet und für diesen bereitgehalten.

Durch diese zweite Verfahrensweise kann demnach bereits für den unmittelbar nächsten Hochschaltvorgang eine deutlich verbesserte Vorhaltezeit berechnet werden, wobei im Vergleich zu der erstgenannten Vorgehensweise nur ein unwesentlich größerer Berechnungsaufwand in einem diesbezüglichen Steuerungsgerät notwendig ist.

### Bezugszeichen

- 1: Getriebeeingangsdrehzahl
- 2: Soll-Getriebeeingangsdrehzahl nach der Schaltung
- 3: Zieldrehzahlfenster
- 4: Drehzahlfenster Synchronlauf
- 5: Verlauf der Getriebeeingangsdrehzahl führt zu keiner Veränderung der Vorhaltezeit
- 6: Verlauf der Getriebeeingangsdrehzahl führt zu einer Verlängerung der Vorhaltezeit
- 7: Verlauf der Getriebeeingangsdrehzahl führt zu einer Verringerung der Vorhaltezeit
- 8: mögliche Verläufe der Getriebeeingangsdrehzahl
- 9: Mitte des Zieldrehzahlfensters
- 10: Bestimmung des maximalen Gradienten der Getriebeeingangsdrehzahl
- 11: Drehzahldifferenz zwischen der Drehzahl des Einschaltvorgangs und der Mitte des Soll-Drehzahlfensters

## Patentansprüche

1. Verfahren zur Steuerung und Regelung einer Getriebebremse eines als Vorgelegegetriebe ausgebildeten Automatgetriebes, mit einer Getriebeeingangswelle, mit mindestens einer von der Getriebeeingangswelle antreibbaren Vorgelegewelle und mit einer Getriebeausgangswelle,
bei dem auf der Getriebeeingangswelle, auf der Vorgelegewelle und/oder auf der Getriebeausgangswelle Loszahnräder drehbar gelagert und/oder Festzahnräder drehfest angeordnet sind, die zumindest paarbildend in Zahneingriff miteinander stehen,
wobei die Losräder zur Durchführung eines Gangwechsels mittels Koppelvorrichtungen mit ihrer Getriebewelle drehfest verbindbar sind
sowie mit einer Getriebebremse, mit der die Vorgelegewelle gesteuert von einem Steuergerät bei einem Hochschaltvorgang derartig abbremsbar ist,
dass deren Drehzahl zum Einkoppelzeitpunkt der Synchrondrehzahl entspricht oder dieser bis auf einen vorbestimmen Abstand nahe kommt,
wobei zur Bestimmung des Abschaltzeitpunktes der Getriebebremse der Bremsgradient der Vorgelege- bzw. Getriebeeingangsdrehzahl sowie der Gradient der Getriebeabtriebswellendrehzahl berücksichtigt werden,
**dadurch gekennzeichnet, dass** die Getriebebremse unter Berücksichtigung einer Vorhaltezeit vor dem berechneten Abschaltzeitpunkt abgeschaltet wird, wobei die Vorhaltezeit in Abhängigkeit von der Qualität eines absolvierten Hochschaltvorgangs bewertet wird.

2. Verfahren nach Anspruch 1, **dadurch gekennzeichnet , dass** die Vorhaltezeit für eine in einem Automatgetriebe verbaute Getriebebremse zumindest einmal individuell und/oder adaptiv in vorbestimmten Abständen oder durch wiederholte adaptive Berechnungen dieser Vorhaltezeit bei jedem Hochschaltvorgang bestimmt wird.

3. Verfahren nach Anspruch 1 oder 2, **dadurch gekennzeichnet, dass** das Bewertungskriterium für die Qualität eines absolvierten Hochschaltvorgangs das Erreichen eines vorbestimmten Zieldrehzahlfensters (3) durch die Getriebeeingangsdrehzahl (1) aufgrund des Bremseingriffs ist, wobei die obere Drehzahl des Zieldrehzahlfensters (3) unterhalb der nach der Hochschaltung vorhandenen Soll-Getriebeeingangsdrehzahl (2) liegt.

4. Verfahren nach wenigstens einem der vorherigen Ansprüche, **dadurch gekennzeichnet , dass** der Wert für die Vorhaltezeit für zukünftige Hochschaltvorgänge konstant bleibt, wenn der Einkoppelvorgang mit einer in dem Zieldrehzahlfenster (3) liegenden Getriebeeingangsdrehzahl (5) erfolgt, und dass die Vorhaltezeit neu berechnet wird, wenn der Einkoppelvorgang mit einer außerhalb des Zieldrehzahlfensters (3) liegenden Getriebeeingangsdrehzahl (6; 7) stattfindet.

5. Verfahren nach Anspruch 4, **dadurch gekennzeichnet , dass** dann, wenn der Einkoppelvorgang drehzahlbezogen unterhalb des Zieldrehzahlfensters (3) erfolgt, die Vorhaltezeit für den nächsten Hochschaltvorgang um einen vorbestimmten Zeitraum verlängert wird, während die Vorhaltezeit um einen vorbestimmten Zeitraum verkürzt wird, wenn der Einkoppelvorgang drehzahlbezogen über dem Zieldrehzahlfenster (3) erfolgt.

6. Verfahren nach Anspruch 4, **dadurch gekennzeichnet, dass** zur Berechnung einer neuen Vorhaltezeit der maximale Drehzahlgradient (10) der Getriebeeingangsdrehzahl (1) während des laufenden Hochschaltvorgangs bestimmt wird, dass die Drehzahldifferenz (11) zwischen der Getriebeeingangsdrehzahl (8) während des Einkoppelvorgangs und der Mitte (9) des Soll-Drehzahlfensters (3) ermittelt wird, dass durch Division der Drehzahldifferenz (11) durch den maximalen Drehzahlgradienten (10) der Veränderungswert für den nächsten Hochschaltvorgang berechnet wird, und dass durch Anwendung dieses Veränderungswertes auf die Vorhaltezeit des letzten Hochschaltvorgangs die neue Vorhaltezeit für den nächsten Hochschaltvorgang berechnet wird.

## Claims

1. Method for controlling and regulating a transmission brake of an automatic transmission which is designed as a countershaft transmission, having a transmission input shaft, having at least one countershaft which can be driven by the transmission input shaft and having a transmission output shaft,
in which loose gearwheels are rotatably mounted and/or fixed gearwheels are rotationally fixedly arranged on the transmission input shaft, on the countershaft and/or on the transmission output shaft, which loose gearwheels and/or fixed gearwheels are in toothed engagement with one another at least in a paired fashion,
with it being possible for the loose wheels to be rotationally fixedly connected to their transmission shaft by means of coupling devices in order to carry out a gearshift,
and having a transmission brake, by means of which the countershaft can be braked during an upshift process, in a manner controlled by a control unit, in such a way that the rotational speed of said countershaft at the coupling time corresponds to the synchronous rotational speed or approaches said synchronous rotational speed to within a predetermined interval,
with the braking gradient of the countershaft rotational speed or transmission input rotational speed and the gradient of the transmission drive-output shaft rotational speed being taken into consideration for determining the deactivation time of the transmission brake,
**characterized in that** the transmission brake is deactivated taking into consideration a lead time before the calculated deactivation time, with the lead time being evaluated as a function of the quality of an upshift process which has taken place.

2. Method according to Claim 1, **characterized in that** the lead time for a transmission brake which is installed in an automatic transmission is determined at least once individually and/or adaptively at predetermined intervals or by means of repeated adaptive calculations of said lead time during every upshift process.

3. Method according to Claim 1 or 2, **characterized in that** the evaluation criterion for the quality of an upshift process which has taken place is the attainment, by the transmission input rotational speed (1), of a predetermined target rotational speed window (3) on account of the braking intervention, with the upper rotational speed of the target rotational speed window (3) lying below the nominal transmission input rotational speed (2) which is present after the upshift.

4. Method according to at least one of the preceding claims, **characterized in that** the value for the lead time remains constant for future upshift processes if the coupling process takes place at a transmission input rotational speed (5) which lies within the target rotational speed window (3), and **in that** the lead time is re-calculated if the coupling process takes place at a transmission input rotational speed (6; 7) which lies outside the target rotational speed window (3).

5. Method according to Claim 4, **characterized in that**, when the coupling process takes place below the target rotational speed window (3) in terms of rotational speed, the lead time for the next upshift process is lengthened by a predetermined time period, while the lead time is shortened by a predetermined time period if the coupling process takes place above the target rotational speed window (3) in terms of rotational speed.

6. Method according to Claim 4, **characterized in that**, to calculate a new lead time, the maximum rotational speed gradient (10) of the transmission input rotational speed (1) is determined during the present upshift process, **in that** the rotational speed difference (11) between the transmission input rotational speed (8) during the coupling process and the middle (9) of the nominal rotational speed window (3) is determined, **in that** the change value for the next upshift process is calculated by dividing the rotational speed difference (11) by the maximum rotational speed gradient (10), and **in that** the new lead time for the next upshift process is calculated by applying said change value to the lead time of the previous upshift process.

## Revendications

1. Procédé de commande et de régulation d'un frein d'engrenage d'une boîte de vitesses automatique réalisée sous forme de boîte de vitesses à arbre intermédiaire, comprenant un arbre d'entrée de boîte de vitesses, au moins un arbre intermédiaire pouvant être entraîné par l'arbre d'entrée de boîte de vitesses, et un arbre de sortie de boîte de vitesses,
dans lequel, sur l'arbre d'entrée de boîte de vitesses, sur l'arbre intermédiaire et/ou sur l'arbre de sortie de boîte de vitesses sont montées à rotation des roues dentées mobiles, et/ou sont disposées, de manière solidaire en rotation, des roues dentées fixes, qui s'engrènent les unes dans les autres au moins en formant des paires,
les roues mobiles pouvant être connectées de manière solidaire en rotation à leur arbre de boîte de vitesses pour effectuer un changement de vitesse au moyen de dispositifs d'accouplement,
la boîte de vitesses automatique comprenant en outre un frein d'engrenage, avec lequel l'arbre intermédiaire peut être freiné de manière commandée par un appareil de commande dans le cas d'une opération de passage à une vitesse supérieure, de telle sorte que sa vitesse de rotation à l'instant d'accouplement corresponde à la vitesse de rotation synchrone, ou s'approche de celle-ci jusqu'à un écart prédéterminé,
le gradient de freinage de la vitesse de rotation de l'arbre intermédiaire ou de la vitesse de rotation de l'arbre d'entrée de boîte de vitesses ainsi que le gradient de la vitesse de rotation de l'arbre de sortie de boîte de vitesses étant pris en compte pour déterminer l'instant de coupure du frein d'engrenage,
**caractérisé en ce que** le frein d'engrenage est coupé en tenant compte d'un temps de rétention avant l'instant de coupure, le temps de rétention étant évalué en fonction de la qualité d'une opération de passage à une vitesse supérieure terminée.

2. Procédé selon la revendication 1, **caractérisé en ce que** le temps de rétention est déterminé pour un frein d'engrenage monté dans une boîte de vitesses automatique, au moins une fois individuellement et/ou de manière adaptée à intervalles prédéterminés ou par des calculs adaptatifs répétés de ce temps de rétention pour chaque opération de passage à la vitesse supérieure.

3. Procédé selon la revendication 1 ou 2, **caractérisé en ce que** le critère d'évaluation de la qualité d'une opération de passage à une vitesse supérieure terminée est l'obtention d'une fenêtre de vitesse de rotation cible prédéterminée (3) par la vitesse de rotation de l'arbre d'entrée de boîte de vitesses (1) sur la base de l'intervention du frein, la vitesse de rotation supérieure de la fenêtre de vitesse de rotation cible (3) se trouvant en dessous de la vitesse de rotation de l'arbre d'entrée de boîte de vitesses de consigne (2) existant après le passage à la vitesse supérieure.

4. Procédé selon au moins l'une quelconque des revendications précédentes, **caractérisé en ce que** la valeur du temps de rétention pour des opérations futures de passage à une vitesse supérieure reste constante lorsque l'opération d'accouplement s'effectue à une vitesse de rotation de l'arbre d'entrée de boîte de vitesses (5) situé dans la fenêtre de vitesse de rotation cible (3), et **en ce que** le temps de rétention est recalculé lorsque l'opération d'accouplement a lieu avec une vitesse de rotation de l'arbre d'entrée de boîte de vitesses (6 ; 7) en dehors de la fenêtre de vitesse de rotation cible (3).

5. Procédé selon la revendication 4, **caractérisé en ce que** lorsque l'opération d'accouplement s'effectue en fonction de la vitesse de rotation en dessous de la fenêtre de vitesse de rotation cible (3), le temps de rétention pour l'opération suivante de passage à une vitesse supérieure est prolongé d'un intervalle de temps prédéterminé tandis que le temps de rétention est raccourci d'un intervalle de temps prédéterminé lorsque l'opération d'accouplement s'effectue en fonction de la vitesse de rotation au-dessus de la fenêtre de vitesse de rotation cible (3).

6. Procédé selon la revendication 4, **caractérisé en ce que** pour le calcul d'un nouveau temps de rétention, on détermine le gradient de vitesse de rotation maximal (10) de la vitesse de rotation de l'arbre d'entrée de boîte de vitesses (1) pendant l'opération de passage à une vitesse supérieure courante, **en ce que** la différence de vitesse de rotation (11) entre la vitesse de rotation de l'arbre d'entrée de boîte de vitesses (8) pendant l'opération d'accouplement et le milieu (9) de la fenêtre de vitesse de rotation cible (3) est déterminée, **en ce que** par division de la différence de vitesse de rotation (11) par le gradient maximal de vitesse de rotation (10), on calcule la valeur de variation pour l'opération suivante de passage à la vitesse supérieure, et **en ce que**, par l'application de cette valeur de variation au temps de rétention de la dernière opération de passage à une vitesse supérieure, on calcule le nouveau temps de rétention pour l'opération suivante de passage à la vitesse supérieure.
